# EUROPEAN PATENT APPLICATION

(11) **EP 4 557 604 A1**
(43) Date of publication of application: **21.05.2025**
(21) Application number: 23838458.0
(22) Date of filing: 28.03.2023
(51) Int. Cl.: H02S 10/12, H02S 20/00, B63B 35/44, A01K 61/60

(54) **MULTIFUNCTIONAL INTEGRATED PLATFORM**

(30) Priority: 13.07.2022 CN 202210821992
(71) Applicant: Huaneng Clean Energy Research Institute, Beijing 102209 (CN)
(72) Inventor: CHEN, Jianjun, Beijing 102209 (CN); LIU, Ruichao, Beijing 102209 (CN); LIU, Xin, Beijing 102209 (CN); YAN, Shu, Beijing 102209 (CN); ZHOU, Yiming, Beijing 102209 (CN); LEI, Yu, Beijing 102209 (CN)
(74) Representative: advotec.
(86) International application number: PCT/CN2023/084313
(87) International publication number: WO 2024/011956

(57) **Abstract**

Disclosed in the present application is a multifunctional integrated platform, comprising a fan, a photovoltaic power generation system, a floating body, and a net cage. The fan, the photovoltaic power generation system and the net cage are all mounted on the floating body. The fan is configured to perform wind power generation, and the photovoltaic power generation system is configured to perform photovoltaic power generation, and comprises a plurality of photovoltaic cell panels. Integrated utilization based on a space is achieved, and the fan, the photovoltaic power generation system and the smart net cage are arranged on one floating body, such that the total construction cost is reduced.

## Description

### CROSS-REFERENCE TO RELATED APPLICATION

The present disclosure claims priority to and benefits of Chinese Patent Application No. 202210821992.9, filed with China National Intellectual Property Administration on July 13, 2022, entitled "a multifunctional integrated platform", the entire content of which is incorporated herein by reference.

### FIELD

The present disclosure belongs to a field of offshore power generation, and specifically relates to a multifunctional integrated platform.

### BACKGROUND

At present, the marine fish culture mainly adopts a manner of net cage culture. At the present stage, the net cage culture is mainly concentrated in estuaries and coastal inner bay regions, which has caused serious environmental pollution and thus leads to a decline in culture quality, and thus the near-shore mariculture mode is in urgent need of transformation. Gradually large-scaled and scaled net cage facilities, modernized and automated aquaculture equipment, and aquaculture space further expanding to the open sea are main trends of the net cage culture in the future. For the net cage culture in deep and distant sea areas, a safe and reliable net cage equipment is needed. Moreover, due to the vigorous development of offshore wind power generation and offshore photovoltaic power generation, the offshore wind power generation and offshore photovoltaic power generation need to build a base to install a wind power generation system and a photovoltaic power generation system, while the base or a floating body has a low use efficiency and a high construction cost.

### SUMMARY

A purpose of the present disclosure is to provide a multifunctional integrated platform to combine an offshore wind power generation system, an offshore photovoltaic power generation system and a net cage, so as to reduce a construction cost.

In order to achieve the above purpose, the present disclosure provides a multifunctional integrated platform, which includes a wind turbine, a photovoltaic power generation system, a floating body and a net cage. The floating body includes a center pontoon and an edge pontoon, and a plurality of edge pontoons is arranged at an outer side of the center pontoon along a circumferential direction. The center pontoon is connected to the edge pontoon by a connecting frame, and the connecting frame is provided a plurality of mounting plates. The wind turbine is mounted on the center pontoon, the photovoltaic power generation system is mounted on the mounting plates, and the net cage is arranged at an outer side and a lower portion of the floating body.

Optionally, the connecting frame includes a plurality of groups of connecting beams, each group of connecting beams includes a first connecting beam, a second connecting beam, and a third connecting beam arranged sequentially from up to down; one end of each of the first connecting beam, the second connecting beam, and the third connecting beam is fixedly connected to the center pontoon, and the other end of each of the first connecting beam, the second connecting beam, and the third connecting beam is fixedly connected to the edge pontoon; and the plurality of mounting plates are fixedly connected between adjacent second connecting beams.

Optionally, adjacent edge pontoons are fixedly connected to each other by a transverse support rod and an inclined support rod.

Optionally, the photovoltaic power generation system includes a plurality of photovoltaic cell panels, the photovoltaic cell panel is inclined in such a manner that an end of the photovoltaic cell panel adjacent to the wind turbine is higher than an end of the photovoltaic cell panel away from the wind turbine.

Optionally, a net cage support rod is arranged outboard to each of an upper portion and a lower portion of the edge pontoon, one end of the net cage support rod is fixed to the edge pontoon and the other end of the net cage support rod is configured to mount a netting, and a horizontally arranged netting and a vertically arranged netting are mounted between two adjacent net cage support rods.

Optionally, a reinforcing rib is connected between the net cage support rod and the edge pontoon.

Optionally, a boarding docking platform is arranged to a side of the floating body, the boarding docking platform includes an upper boarding docking plate and a lower boarding docking plate, and the upper boarding docking plate and the lower boarding docking plate are connected by a staircase.

Optionally, the edge pontoon of the floating body where the boarding docking platform is located has a single mooring.

Optionally, the center pontoon and the edge pontoon have a same structure, and include a upper cylinder and a lower cylinder fixedly connected, a diameter ratio of the upper cylinder to the lower cylinder is 1.5~2:1, and a height ratio of the upper cylinder to the lower cylinder is 1:1.5~2.

Compared to the related art, the present disclosure has at least the following beneficial technical effects.

The present disclosure provides a floating integrated platform which combines an offshore wind power generation system, an offshore photovoltaic power generation system and a smart net cage, thus realizing an integrated utilization based on space, and the wind turbine, the photovoltaic power generation system and the smart net cage are arranged on one floating body, thus reducing the overall construction cost. It also realizes integrated development, in-situ consumption, and a significant reduction in a comprehensive operation and maintenance cost, etc.

Optionally, the adjacent edge pontoons are connected to each other by the transverse support rod and the inclined support rod, thus improving the integrality of the floating body and extending the service life of the floating body.

Optionally, one boarding docking platform is arranged to the side of the floating body, and includes two levels, an upper level may dock a large ship or a shallow draft ship, and a lower level may dock a small ship or a deep draft ship.

Optionally, in a mooring system of the multifunctional integrated platform, except for the edge pontoon immediately adjacent to the boarding docking platform, other edge pontoons have a double mooring, and the edge pontoon at the boarding docking system has a single mooring, thus facilitating temporary anchoring of a boarding docking ship.

Optionally, the diameter ratio of the upper cylinder to the lower cylinder is (1.5~2):1, and the height ratio of the upper cylinder to the lower cylinder is 1: (1.5~2). Thus, the overall center is lower, and the buoyancy is larger.

### BRIEF DESCRIPTION OF THE DRAWINGS

FIG 1 shows an overall schematic view of a multifunctional integrated platform provided by an embodiment of the present disclosure.
FIG 2 shows a top view of a multifunctional integrated platform provided by an embodiment of the present disclosure.
FIG 3 shows a left view of a multifunctional integrated platform provided by an embodiment of the present disclosure.
FIG 4 shows a schematic view of a functional division of a multifunctional integrated platform provided by an embodiment of the present disclosure.
FIG 5 shows a right view of a functional division of a multifunctional integrated platform provided by an embodiment of the present disclosure.
FIG 6 shows a schematic view of a detailed structure of a multifunctional integrated platform provided by an embodiment of the present disclosure.
FIG 7 shows a schematic view of a boarding docking system of a multifunctional integrated platform provided by an embodiment of the present disclosure.

In the drawings: 1 net cage, 2 floating body, 3 photovoltaic power generation system, 4 wind turbine, 5 reinforcing rib, 6 mounting plate, 11 netting, 21 center pontoon, 22 connecting frame, 221 first connecting beam, 222 second connecting beam, 223 third connecting beam, 23 edge pontoon, 24 inclined support rod, 25 transverse support rod, 26 net cage support rod, 27 boarding docking platform, 271 upper boarding docking plate, 272 lower boarding docking plate, 273 staircase, 31 photovoltaic cell panel.

### DETAILED DESCRIPTION

In order to make the purpose and technical solution of the present disclosure clearer and easier to understand. The present disclosure is hereinafter described in optional detail in conjunction with the accompanying drawings and embodiments, and the specific embodiments described herein are only for the purpose of explaining the present disclosure and are not intended to limit the present disclosure.

In the description of the present disclosure, it is to be understood that the terms such as "central", "longitudinal", "transverse", "up", "down", "front", "rear", "left", "right", "vertical", "horizontal", "top", "bottom", "in", "out", etc. indicate orientations or positional relationships that are based on those shown in the accompanying drawings, and are intended only to facilitate the description of the present disclosure and to simplify the description, and are not intended to indicate or imply that the device or element referred to must have a particular orientation, be constructed and operated in a particular orientation, and therefore is not to be understood as a limitation to the present disclosure. Furthermore, the terms "first" and "second" are only for purpose of description and are not to be understood as indicating or implying relative importance or implicitly specifying the number of technical features indicated. Thus, a feature defined with the terms "first" and "second" may expressly or impliedly include one or more such features. In the description of the present disclosure, unless otherwise specified, "a plurality of" means two or more. In the description of the present disclosure, it is to be noted that, unless otherwise expressly specified and limited, the terms "mount", "connect", "couple" are to be understood in a broad sense, e.g., that may be a fixed connection, a removable connection, or an integral connection; that may be a mechanical connection or an electrical connection; that may be a direct connection or an indirect connection through an intermediate medium; and that may be a communication with two elements. For those ordinary skilled in the art, the specific meaning of the above terms in the present disclosure may be understood in specific cases.

### Embodiment 1

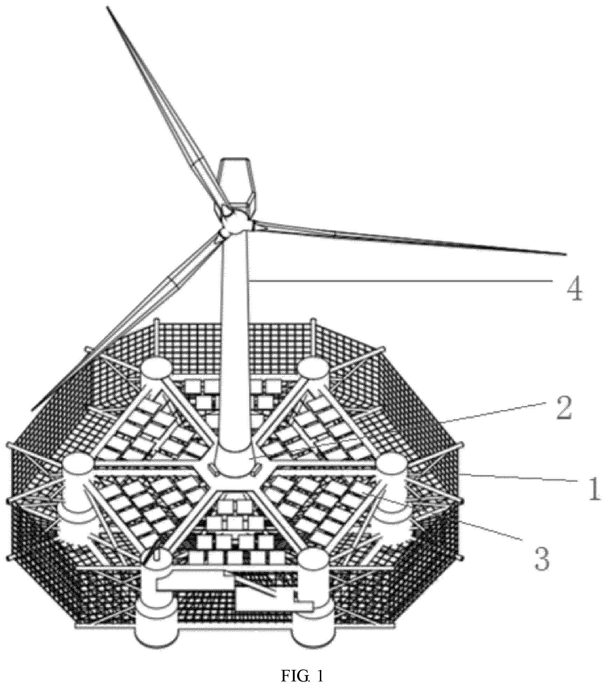

Referring to FIG 1, a multifunctional integrated platform includes a wind turbine 4, a photovoltaic power generation system 3, a floating body 2, and a net cage 1. The wind turbine 4, the photovoltaic power generation system 3, and the net cage 1 are mounted to the floating body 2.

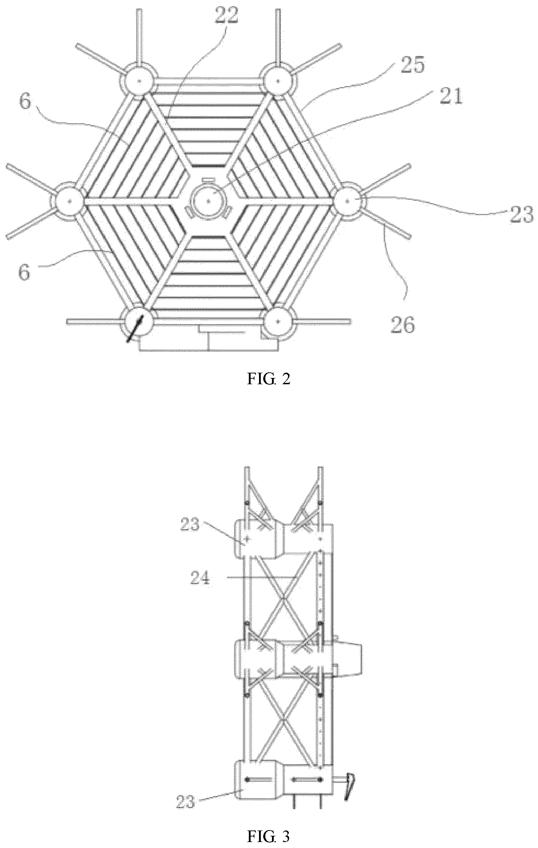

Referring to FIGS. 2, 3 and 7, the floating body 2 includes a center pontoon 21 and six edge pontoons 23, the floating body 2 has a hexagonal shape as a whole, the center pontoon 21 is arranged at a center of the floating body 2, and one edge pontoon 23 is arranged at each of six corner portions of the floating body 2. The center pontoon 21 and the edge pontoon 23 are connected by a connecting frame 22, the connecting frame 22 includes six groups of connecting beams, each group of connecting beams includes a first connecting beam 221, a second connecting beam 222, and a third connecting beam 223, and the first connecting beam 221, the second connecting beam 222, and the third connecting beam 223 are arranged sequentially from up to down. One end of each of the first connecting beam 221, the second connecting beam 222, and the third connecting beam 223 is welded to the center pontoon 21, and the other end of each of the first connecting beam 221, the second connecting beam 222, and the third connecting beam 223 is welded to the edge pontoon 23. Upper portions of two adjacent edge pontoons 23 are connected to each other by two transverse support rods 25 and two inclined support rods 24. A plurality of mounting plates 6 parallel to each other are fixedly connected between two adjacent second connecting beams 222. A photovoltaic bracket is mounted on the mounting plates 6, and a photovoltaic cell panel 31 is mounted on the photovoltaic bracket. The connecting frame 22, the mounting plate 6 and the photovoltaic bracket are all made of steel.

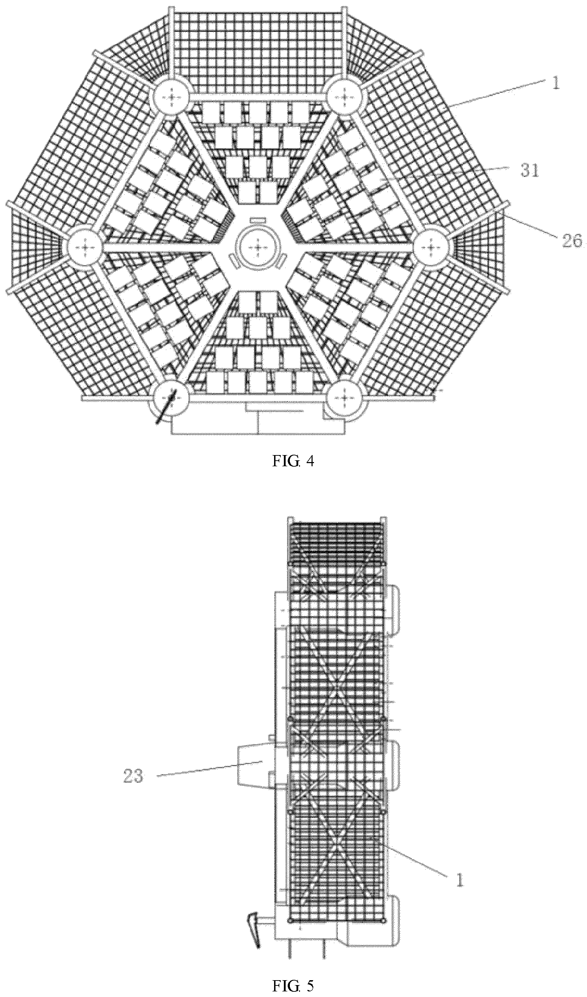

Referring to FIGS. 1, 4 and 5, the wind turbine 4 is configured to carry out wind power generation, the wind turbine 4 is arranged in a center of a hexagonal structure of the floating body 2 and is mounted on the center pontoon 21, the photovoltaic power generation system 3 is mounted on the mounting plates 6, and the net cage 1 is mounted at a periphery and at a bottom of the floating body 2. The photovoltaic power generation system 3 is configured to carry out photovoltaic power generation and includes a plurality of photovoltaic cell panels 31, and the photovoltaic cell panel 31 is inclined in such a manner that a position of an end of the photovoltaic cell panel 31 adjacent to the wind turbine 4 is higher than a position of an end of the photovoltaic cell panel 31 away from the wind turbine 4.

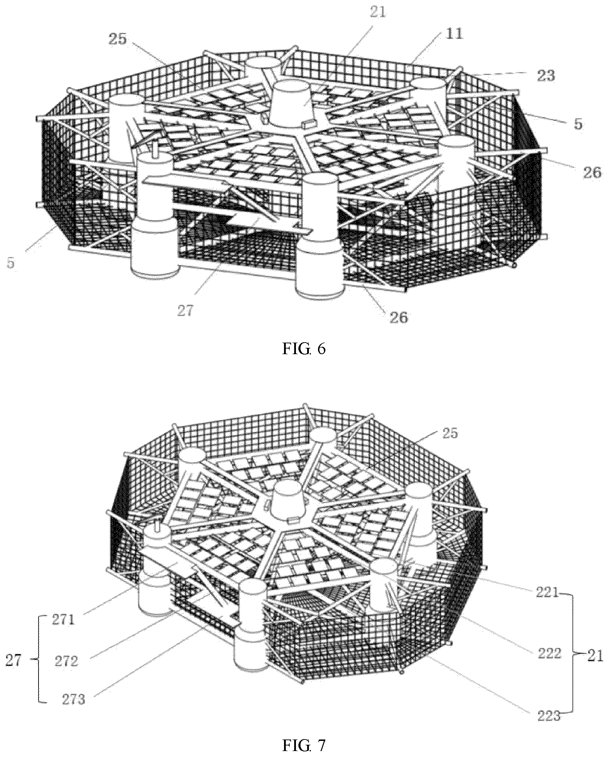

Referring to FIGS. 6 and 7, the net cage 1 is arranged by a net cage support rod 26 extending from the hexagonal floating body 2, the unfolding of a netting 11 is supported by the upper transverse support rod 25 at a upper portion of the net cage 1, the unfolding of the netting 11 is supported by a reinforcing rib 5 at a middle portion of the net cage 1, and the unfolding of the netting 11 is supported by the third connecting beam 223 and the lower transverse support rod 25 at a lower portion of the net cage 1. Except for the edge pontoon 23 connected to a boarding docking platform 27, two net cage support rods 26 are fixed outboard to each of upper and lower outer portions of each edge pontoon 23, and an included angle between the two net cage support rods 26 is 30° ~ 60°. One end of the net cage support rod 26 is welded to the edge pontoon 23 and the other end of the net cage support rod 26 is configured to mount the netting 11. A horizontally arranged netting and a vertically arranged netting are mounted between two adjacent net cage support rods 26. All of the third connecting beams 223 form a frame, for supporting the unfolding of a lower netting.

The reinforcing rib 5 is connected between the net cage support rod 26 and the edge pontoon 23. The net cage support rod 26 fixedly connected to the lower portion of the edge pontoon 23 is configured to be connected to a mooring cable.

Referring to FIG 6, the center pontoon 21 and the edge pontoon 23 have the same structure, the upper and lower portions of each of the center pontoon 21 and the edge pontoon 23 are cylinders with different diameters, a diameter ratio of an upper cylinder to a lower cylinder is (1.5~2):1, and a height ratio of the upper cylinder to the lower cylinder is 1: (1.5~2). Preferably, the diameter ratio of the upper cylinder to the lower cylinder is 1.5:1, and the height ratio of the upper cylinder to the lower cylinder is 1:1.5.

Referring to FIG 7, the integrated platform is provided with the boarding docking platform 27, and the boarding docking platform 27 includes upper and lower levels, the upper level is a upper boarding docking plate 271, which may dock a large ship or a shallow draft ship, and the lower level is a lower boarding docking plate 272, which is configured to dock a small ship or a deep draft ship. The upper boarding docking plate 271 and the lower boarding docking plate 272 are connected to each other by a staircase 273. No net cage 1 is arranged at a side of the floating body 2 where the boarding docking platform 27 is arranged.

In a mooring system of the multifunctional integrated platform, except for the edge pontoon 23 immediately adjacent to the boarding docking platform 27, other edge pontoons 23 have a double mooring, and the edge pontoon at the boarding docking system has a single mooring, thus facilitating temporary anchoring of a boarding docking ship.

### Embodiment 2

The multifunctional integrated platform of this embodiment has the same structure as that of Embodiment 1, with the difference that the net cage 1 is a smart net cage, and the net cage is provided with an automatic feeding system and an automatic monitoring system. The automatic feeding system feeds automatically, saving a lot of labor and reducing a cost of feeding. The automatic monitoring system is configured to monitor the temperature, salinity, dissolved oxygen, pH value, etc. of the net cage, thus providing technical support for the staff to grasp the water environment of culturing in real time.

The above content is only to illustrate the technical ideas of the present disclosure, and cannot limit the scope of protection of the present disclosure hereby. Any technical ideas proposed in accordance with the present disclosure, and any changes made on the basis of the technical solutions, fall within the scope of protection of the claims of the present disclosure.

## Claims

1. A multifunctional integrated platform, comprising a wind turbine (4), a photovoltaic power generation system (3), a floating body (2) and a net cage (1); the floating body (2) comprising a center pontoon (21) and a edge pontoon (23), a plurality of edge pontoons (23) being arranged at an outer side of the center pontoon (21) along a circumferential direction; the center pontoon (21) being connected to the edge pontoon (23) by a connecting frame (22), and the connecting frame (22) being provided with a plurality of mounting plates (6); the wind turbine (4) being mounted on the center pontoon (21), the photovoltaic power generation system (3) being mounted on the mounting plates (6), and the net cage (1) being arranged at an outer side and a lower portion of the floating body (2).

2. The multifunctional integrated platform according to claim 1, wherein the connecting frame (22) comprises a plurality of groups of connecting beams, each group of connecting beams comprises a first connecting beam (221), a second connecting beam (222), and a third connecting beam (223) arranged sequentially from up to down; one end of each of the first connecting beam (221), the second connecting beam (222), and the third connecting beam (223) is fixedly connected to the center pontoon (21) and the other end of each of the first connecting beam (221), the second connecting beam (222), and the third connecting beam (223) is fixedly connected to the edge pontoon (23); and the plurality of mounting plates (6) are fixedly connected between adjacent second connecting beams (222).

3. The multifunctional integrated platform according to claim 1, wherein adjacent edge pontoons (23) are fixedly connected to each other by a transverse support rod (25) and an inclined support rod (24).

4. The multifunctional integrated platform according to claim 1, wherein the photovoltaic power generation system (3) comprises a plurality of photovoltaic cell panels (31), and the photovoltaic cell panel (31) is inclined in such a manner that an end of the photovoltaic cell panel (31) adjacent to the wind turbine (4) is higher than an end of the photovoltaic cell panel (31) away from the wind turbine (4).

5. The multifunctional integrated platform according to claim 1, wherein a net cage support rod (26) is arranged outboard to each of an upper portion and a lower portion of the edge pontoon (23), one end of the net cage support rod (26) is fixed to the edge pontoon (23) and the other end of the net cage support rod (26) is configured to mount a netting (11), and a horizontally arranged netting and a vertically arranged netting are mounted between two adjacent net cage support rods (26).

6. The multifunctional integrated platform according to claim 5, wherein a reinforcing rib (5) is connected between the net cage support rod (26) and the edge pontoon (23).

7. The multifunctional integrated platform according to claim 1, wherein a boarding docking platform (27) is arranged to a side of the floating body (2), the boarding docking platform (27) comprises an upper boarding docking plate (271) and a lower boarding docking plate (272), and the upper boarding docking plate (271) and the lower boarding docking plate (272) are connected by a staircase (273).

8. The multifunctional integrated platform according to claim 7, wherein the edge pontoon (23) of the floating body (2) where the boarding docking platform (27) is located has a single mooring.

9. The multifunctional integrated platform according to claim 1, wherein the center pontoon (21) and the edge pontoon (23) have a same structure, and comprise a upper cylinder and a lower cylinder fixedly connected, a diameter ratio of the upper cylinder to the lower cylinder is (1.5~2):1, and a height ratio of the upper cylinder to the lower cylinder is 1: (1.5~2).
